# EUROPEAN PATENT SPECIFICATION

(11) **EP 3 169 610 B1**
(45) Date of publication and mention of the grant of the patent: **12.09.2018**
(21) Application number: 15735709.6
(22) Date of filing: 14.07.2015
(51) Int. Cl.: B65D 85/804

(54) **CARTRIDGE FOR EXTRACTING A BEVERAGE**
KAPSELN ZUR GETRÄNKEZUBEREITUNG
CAPSULE POUR LA PREPARATION DES BOISSONS

(30) Priority: 16.07.2014 IT MI20141293
(43) Date of publication of application: 24.05.2017
(73) Proprietor: Illycaffe' S.p.A., 34147 Trieste (IT)
(72) Inventor: MASTROPASQUA, Luca, I-34137 Trieste (IT); SEGANFREDDO, Ferruccio, I-36063 Marostica (IT); CUTULI, Giuseppe, I-34148 Trieste (IT); GIAMBA, Gianluca, I-34148 Trieste (IT)
(74) Representative: Modiano, Micaela Nadia
(86) International application number: PCT/EP2015/066015
(87) International publication number: WO 2016/008865

(56) References cited:
- EP-A1- 1 580 143
- EP-A1- 1 595 817
- WO-A1-2012/121597
- WO-A1-2013/124234
- WO-A1-2013/192625
- WO-A2-2007/063411

## Description

The present invention relates to a cartridge for extracting a beverage by injecting a fluid preferably at low pressure, in particular in order to obtain filtered coffee, also known as American or drip brew coffee.

Currently several types of cartridges are known for obtaining beverages such as for example espresso coffee or the like, in which the internal volume of the cartridge that contains the substance to be extracted, for example ground roasted coffee, enables a good air seal. Such result can be obtained by using a single body for containing the substance, which is cup-shaped and sealed in an upper region by a film or by a rigid cover which can be perforated in order to allow the injection of the fluid, which is typically hot water.

In order to obtain beverages by way of injecting hot water at low pressure, for example filtered coffee, it is necessary however to prevent or reduce an increase of the hydraulic pressure inside the cartridge when the hot water is injected into it. To this end, it is known for the containment body of the substance to be provided with an opening of considerable size, such as to prevent this increase in pressure both at the start and during the percolation.

It is also known to seal such opening by way of a film, which must be manually torn or must be perforated by the machine before the extraction of the beverage.

A drawback of the known art is that the flow of the beverage exiting from the opening is not homogeneous or "mouse tail-like", which can render the conventional cartridge unsuitable for dispensing the beverage directly into a cup.

Another drawback is that manufacturing the conventional cartridges entails a step of applying the film that seals the opening for the outflow of the beverage, and such step lengthens or complicates the manufacturing.

EP 1 580 143 A1 discloses a cartridge for extracting a beverage from a particulate substance contained therein by means of water under pressure, comprising a main body having a cup portion and a lid portion, in which the cup portion has a base, a sidewall and a rim opposed to the base, and the lid portion is fixedly attached to the rim of the cup portion so as to define an internal volume of the cartridge housing the particulate substance comprised within filtering means for retaining the particulate substance and for percolating fluid substances therethrough. The lid portion has a lid port defining a first passage for percolation fluid substances, and the base of the cup portion has a cup port defining a second passage for percolation fluid substances. The base comprises a plurality of ridges directly formed thereon and protruding towards the internal volume of the cartridge, so as to support the filtering means and the particulate substance and to define a fine canalization between said filtering means and the cup port.

WO 2013/124234 A1 discloses a cartridge for obtaining a beverage by injecting into the cartridge a pressurized fluid, comprising a box-like body, which accommodates a substance from which it is possible to extract the beverage, and which accommodates on its inside an insert which separates the substance from a bottom wall of the box-like body, forming an interspace. The insert comprises an orifice for the passage of the beverage toward the interspace, whereas the bottom wall comprises a region which can be pierced to obtain an opening for the outflow of the beverage. In the interspace there is a basin which is arranged laterally with respect to the pierceable region in order to accumulate the beverage received directly from the orifice and make it flow out of the opening by overflowing.

WO 2012/121597 A1 discloses a disposable package having a reservoir filled with an ingredient to be combined with a base liquid. The package has a moulded plastic body with a bottom and a circumferential wall. The package is sealed by a top sealing film. The body has a column which is at its lower end integral with the centre of the bottom. The top sealing film is such that a base liquid feed lance can pass through the film and engage with the upper end of the column to dispense base liquid into the channel of the column. The column has apertures, so as to allow base liquid that is dispensed from the feed lance, to flow to and through the apertures and then into the reservoir to be combined with the ingredient. The bottom has a multitude of filter holes or discharge openings, so that the liquid introduced via the feed lance into the reservoir interacts with the ingredient and the product thus obtained flows out via the bottom. The bottom has a flexible portion around the column such that the column is movable downwards from an initial position to a lower operative position through engagement with feed lance and suitable relative displacement of the feed lance and the package. A bottom sealing film is provided which breaks upon relative motion of the column to the lower operative position, creating one or more outflow openings in the film for outflow of the product from the package.

The aim of the present invention is to provide a cartridge for extracting a beverage by injecting a fluid, which is capable of improving the known art in one or more of the above mentioned aspects.

Within this aim, an object of the invention is to provide a cartridge for extracting a beverage which enables a homogeneous outflow of the beverage and, as a consequence, makes it possible to dispense it directly into a cup or into a beaker.

Another object of the invention is to provide a cartridge for extracting a beverage which, during manufacturing, eliminates the step of applying a film to seal the opening for the outflow of the beverage.

Another object of the invention is to provide a cartridge for extracting a beverage which is highly reliable, easy to implement and low cost.

In accordance with the invention, there is provided a cartridge as defined in the appended claims.

Further characteristics and advantages of the invention will become better apparent from the description of some preferred, but not exclusive, embodiments of the cartridge according to the invention, which are illustrated by way of non-limiting example in the accompanying drawings wherein:

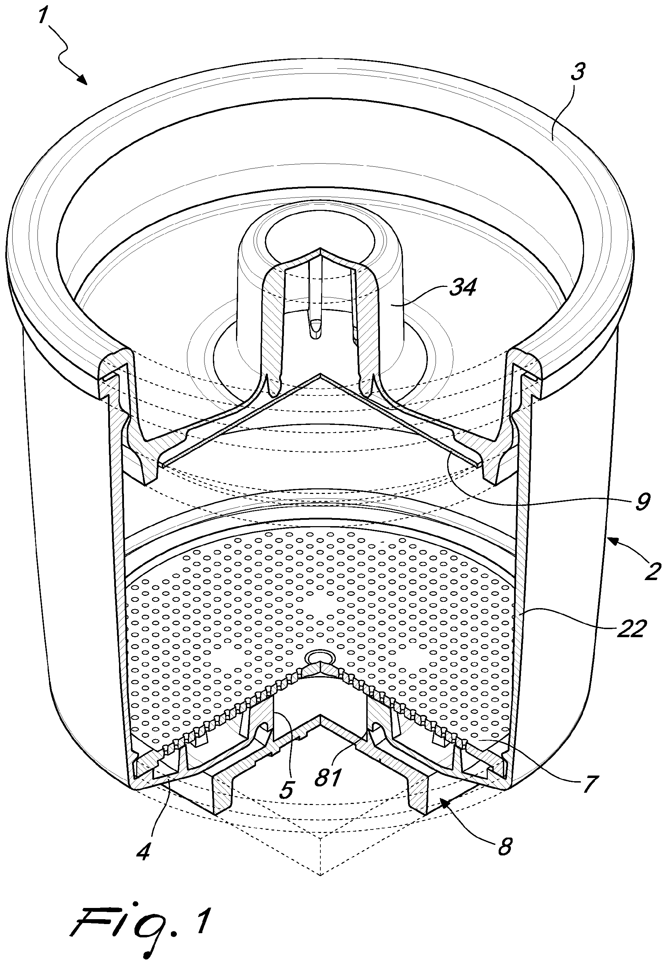

Figure 1 is a cutaway view of a cartridge according to a first embodiment of the invention, in which the substance contained therein has been removed for clarity;

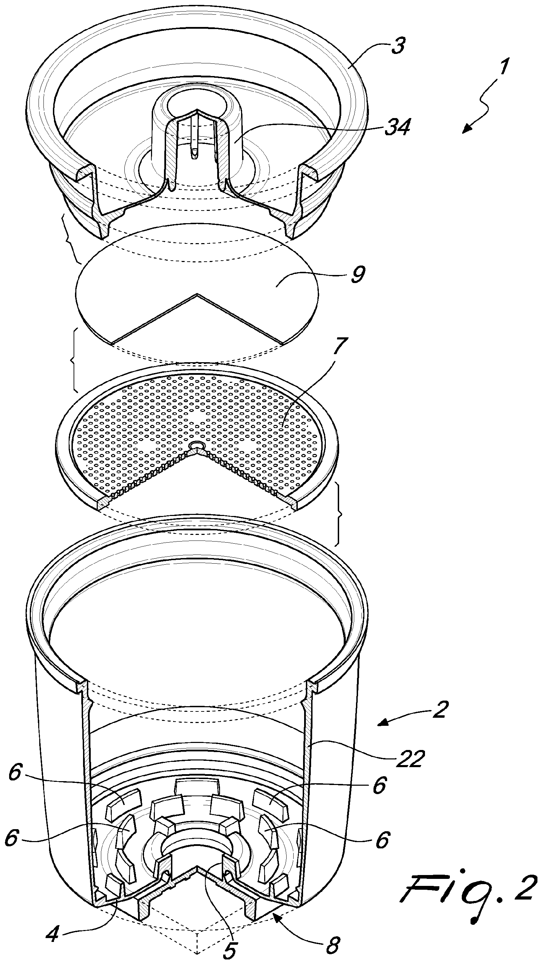

Figure 2 is an exploded view of the cartridge in Figure 1;

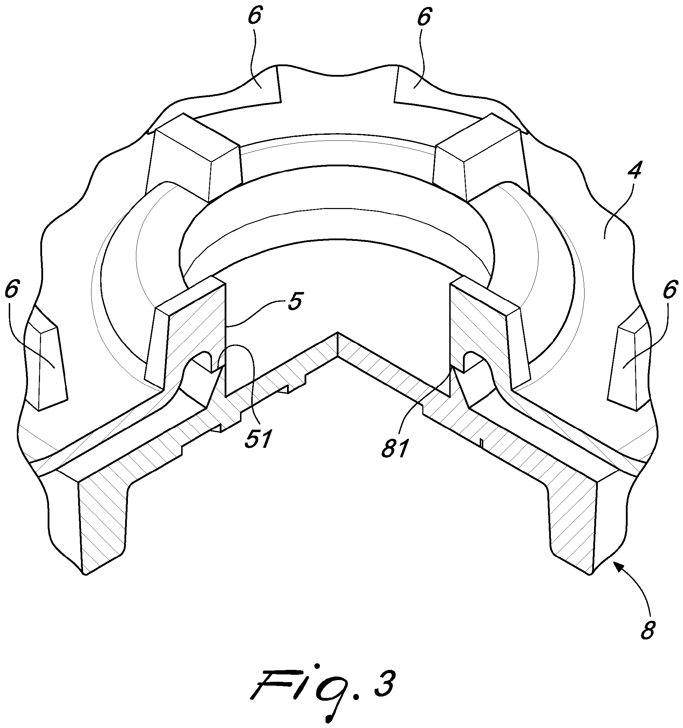

Figure 3 is a detail view of the bottom of the cartridge in Figure 1;

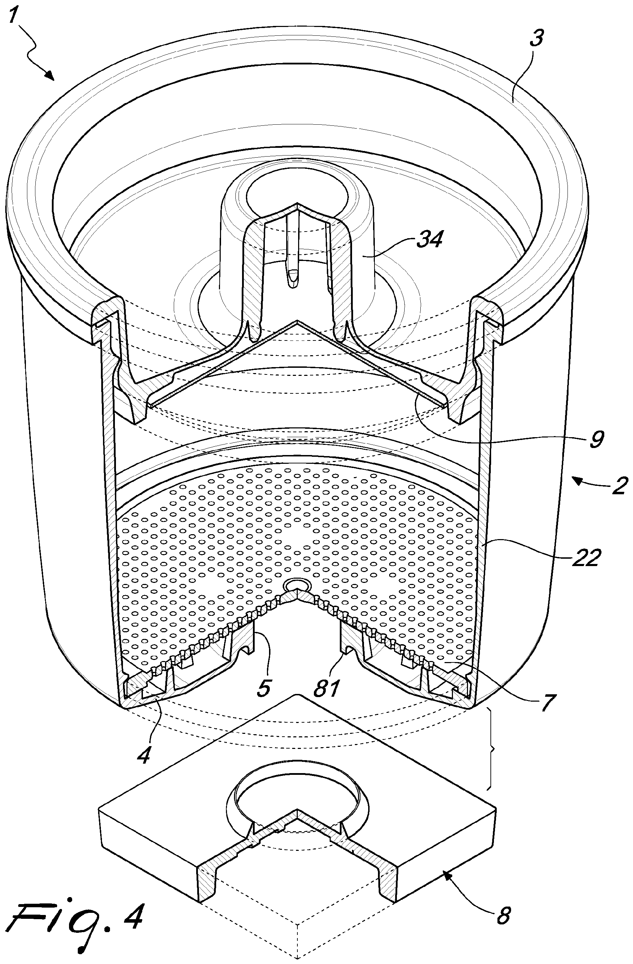

Figure 4 is an exploded view of the bottom part only of the cartridge in Figure 1;

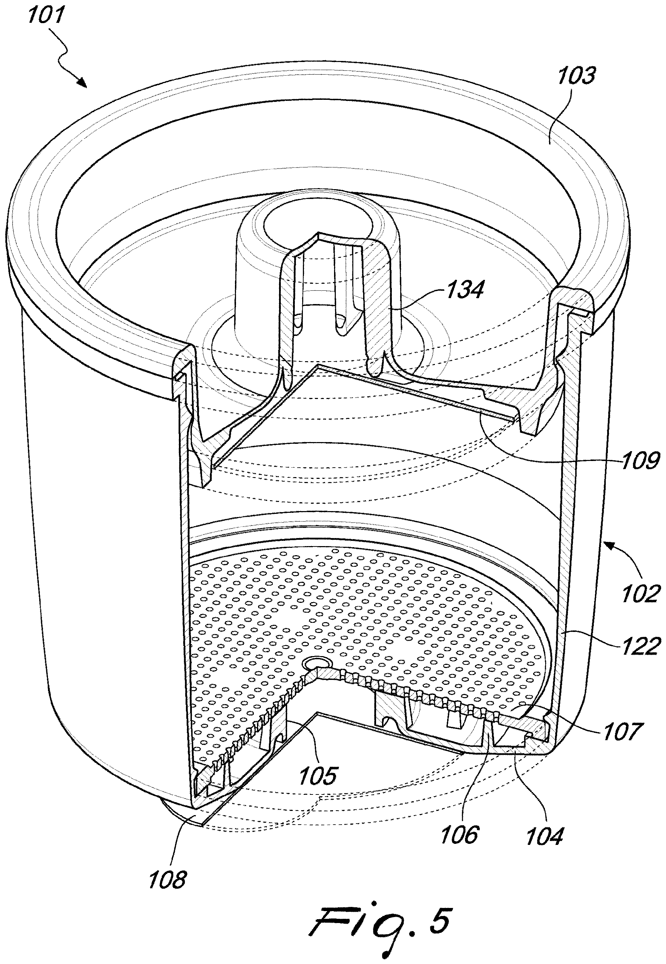

Figure 5 is a cutaway view of a cartridge according to a second embodiment of the invention, in which the substance contained therein has been removed for clarity;

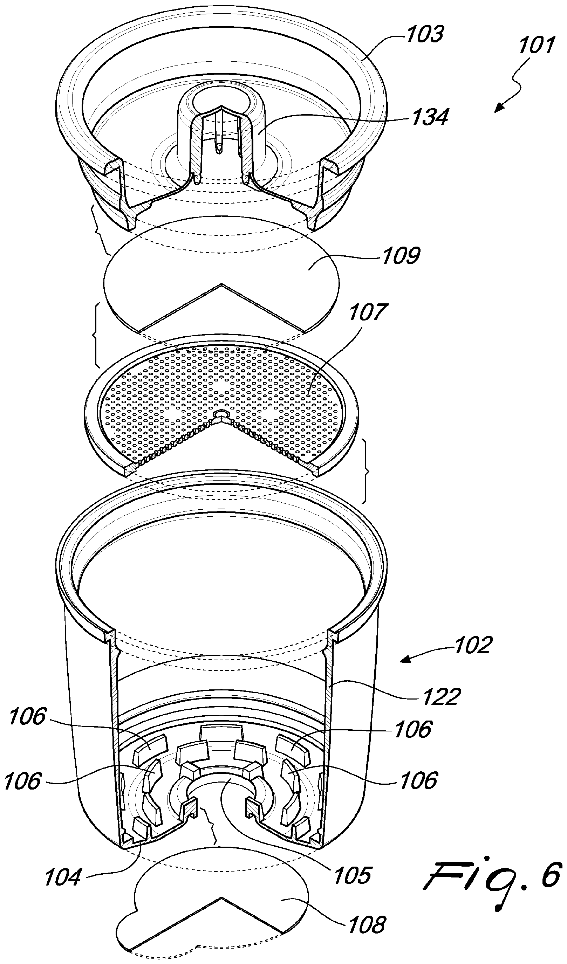

Figure 6 is an exploded view of the cartridge in Figure 5.

With reference to the figures, a cartridge according to the invention, generally designated by the reference numeral 1 or 101 according to the embodiment illustrated, comprises a containment body 2, 102 which is adapted to contain an edible substance, not shown, from which the beverage is to be extracted and adapted to receive a fluid, preferably at low pressure, in particular water.

In the preferred embodiments of the invention, the edible substance can be ground roasted coffee and the water at low pressure can be hot water, for example at around 90-99°C, and the pressure comprised between 0.5 bar and 1.5 bar, so that the beverage obtained is filtered coffee, also known as American coffee or drip brew coffee. The hot water can be injected into the cartridge 1, 101 by a machine that is known per se, even by gravity alone.

Alternatively, the substance contained in the cartridge can be soluble coffee, or any edible substance in powder form, in leaves or freeze-dried, or it can consist of a concentrate.

The containment body 2, 102 which can be made for example of a polymeric material using molding techniques such as, for example, injection and/or compression, heat-formation or extrusion, is cup- or beaker-shaped with at least one opening 5, 105 on the bottom and is sealed in an upper region by a cover 3, 103, which can be perforated so as to permit the injection of the fluid, in particular hot water, at low pressure.

In the embodiments illustrated, the cover 3, 103 is of the rigid type and is also made by way of molding (injection or compression), heat-formation or extrusion of a polymeric material. The cover 3, 103 can be perforated at a tubular spout 34, 134 thereof which protrudes from the cover 3, 103 outwardly from the cartridge 1, 101 in a substantially central position. However, for the purposes of the invention it is not necessary that the cover 3, 103 be of the rigid type, nor that it completely seals the upper part of the containment body 2, 102. For example, the cover can be a film or it can have one or more openings for the inflow of the fluid.

The cartridge 1, 101 can comprise a shower filter 9, 109 which is fixed preferably on the cover 3, 103 and which is adapted to receive the fluid at low pressure which is injected through the cover in order to distribute it substantially evenly on the edible substance contained in the cartridge 1, 101.

The shower filter 9, 109 can be made of filter paper, poly-coated paper, non-woven fabric or other film material with filtering capabilities against the solid particles of the substance contained in the cartridge 1, 101. The shower filter 9, 109 can alternatively be a rigid filter which is fixed by interference on the cover 3, 103, for example at the tubular spout 34, 134.

The containment body 2, 102 comprises a side wall 22, 122 and a bottom wall 4, 104, which has at least one opening 5, 105 for the outflow of the beverage which has an extent such as to prevent an increase in hydraulic pressure inside the cartridge when the fluid is injected. To this end, the opening 5, 105, during use, is free from obstruction, so that the beverage which passes through it exits from the cartridge 1, 101 and is poured directly into the cup without encountering obstacles which could cause an increase in hydraulic pressure inside the cartridge 1, 101.

The outflow opening 5, 105 can be provided so as to usually be closed and be opened only at the moment of use.

In particular, in the first embodiment, the containment body 2 comprises a closure body 8, which is provided in one piece with the containment body 2 during molding so as to be connected to the bottom wall 4 by way of a weakened region 81.

The closure body 8 can be removed by the user by breaking the weakened region 81 before using the cartridge, by way of a rotary motion and/or tearing of the closure body 8 with respect to the containment body 2.

In this manner, it is possible to manufacture any cartridge for extracting a beverage without entailing a step of applying a closure film on the opening for the outflow of the beverage.

In order to close the outflow opening of the invention it is in any case possible, for example in the second embodiment described herein, to use a closure film 108 of the traditional "peel-off' type, instead of the closure body 8.

Alternatively, the outflow opening 105 need not be closed and a secondary packaging can be used to preserve the cartridge 101 before use.

Returning to the first embodiment, the weakened region 81 is arranged preferably so as to surround the outflow opening 5, for example at an outer rim 51 of the outflow opening 5.

The closure body 8 is preferably flat in shape and even more preferably has a profile with sharp edges, for example substantially square in plan, so as to facilitate the manual grip and the consequent removal by rotation and/or tearing.

The bottom wall 4, 104 of the containment body 2, 102 can comprise a plurality of raised portions 6, 106 which protrude from the bottom wall 4, 104 inwardly into the cartridge 1, 101 and which are arranged in a mutually offset arrangement around the outflow opening 5, 105 in order to define obstacles to the flow of the beverage in the radial direction toward the opening 5, 105.

The raised portions 6, 106 are arranged on closed lines, for example circumferences, which are substantially concentric to the axis of the cartridge 1, 101 or of the outflow opening 5, 105, in a mutually offset manner in order to break the flow of beverage which is directed toward the outflow opening 5, 105 and prevent the establishment of preferential channels for the outflow of the beverage. On encountering a raised portion 6, 106 the flow will go around the obstacle, being directed toward the region of lower pressure, in so doing making the distribution of the flow uniform around the opening 5, 105. As a consequence, the beverage flows from the cartridge 1, 101 toward the cup vertically.

The raised portions 6, 106 can be wall-shaped, or they can be substantially planar, and can be arranged on two concentric circumferences as in the embodiments illustrated, so that the raised portions 6, 106 of one circumference are offset with respect to the raised portions 6, 106 of the adjacent circumference, i.e. each raised portion of one circumference radially faces the separation region of two adjacent raised portions of the adjacent circumference, without letting channels to radially cross the two circumferences up to the opening of outflow 5, 105. The distance between two concentric circumferences can be comprised between 1 mm and 4 mm, for example 3 mm.

The raised portions 6, 106 can be arc-shaped, with a center angle comprised between 15° and 30°, for example 22.5°.

Advantageously, the raised portions 6 and 106 also perform the function of supporting a lower filter 7, 107, for example a rigid filter obtained by molding a polymeric material which is provided with a plurality of holes for filtering the substance contained in the cartridge 1, 101. Each one of such filtering holes is conveniently contoured internally with two mutually opposite splays which define two conic sections that converge substantially in the center of the channel defined by the filtering hole.

One or more of the components described above of the cartridge 1, 101 can be made of a thermoplastic polymer, synthesized from traditional sources (such as oil) or from renewable sources (for example by fermentation of alcohols). The thermoplastic polymer is selected from the group that comprises polypropylene, polystyrene, polyamide, vinyl alcohol resin (for example, ethylene vinyl alcohol, EVOH), polyethylene or polyethylene terephthalate (PET). Any one of these thermoplastic polymers can be used in order to provide any component of the cartridge 1, 101, in particular for the cover 3, 103, the containment body 2, 102, the shower filter 9, 109, the lower filter 7, 107. Two or more of the above mentioned thermoplastic polymers, in one or more of such components, can be mutually coupled through manufacturing processes such as heat-formation or co-injection molding. For example, one or more of the components of the cartridge 1, 101 can be a multilayer component, composed of two or more of the thermoplastic polymers listed above.

One or more of the components described above of the cartridge 1, 101 can be made of a biodegradable material, selected from the group that comprises biodegradable polyesters (for example PLA), starch-based biodegradable materials, microbial polyesters, biodegradable vinyl alcohol resins (for example PVOH), biobased thermoplastics, and polyhydroxyalkanoates (PHA). Any one of these biodegradable materials can be used in order to provide any component of the cartridge 1, 101, in particular for the cover 3, 103, the containment body 2, 102, the shower filter 9, 109, the lower filter 7, 107. Two or more of the above mentioned biodegradable materials can be mutually coupled. For example, one or more of the components of the cartridge 1, 101 can be a multilayer component composed of two or more of the biodegradable materials listed above.

Operation of the cartridge according to the invention is evident from the foregoing description.

Although the cartridge according to the invention has been devised specifically for the extraction of filtered coffee from roasted coffee ground to a suitable fineness, it can also be used, more generally, for the extraction of beverages from portioned ingredients.

The cartridge, thus conceived, is susceptible of numerous modifications and variations, all of which are within the scope of the appended claims. Moreover, all the details may be substituted by other, technically equivalent elements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cartridge (1, 101) for extracting a beverage by injecting a fluid, comprising a containment body (2, 102) which is adapted to contain a substance from which the beverage is to be extracted and is adapted to receive said fluid, said containment body (2, 102) comprising at least one opening (5, 105) for the outflow of the beverage which is adapted to prevent an increase in hydraulic pressure inside the cartridge when said fluid is injected, **characterized in that** said containment body (2, 102) comprises a plurality of raised portions (6, 106) for hindering the flow of the beverage, which are arranged in a mutually offset arrangement around said at least one outflow opening (5, 105), and which are arranged along at least two closed lines which are substantially concentric with respect to said at least one outflow opening (5, 105) so that the raised portions (6, 106) of one line are offset with respect to the raised portions (6, 106) of the adjacent lines, i.e., so that each raised portion of one line radially faces the separation region between two adjacent raised portions of the adjacent lines, so as to prevent the presence of radial channels along the bottom wall (4, 104) of the containment body (2, 102) toward said at least one outflow opening (5, 105).

2. The cartridge according to claim 1, **characterized in that** said at least two closed lines are respective circumferences.

3. The cartridge according to one or more of the preceding claims, **characterized in that** said raised portions (6, 106) are substantially arc-shaped.

4. The cartridge according to one or more of the preceding claims or according to the preamble of claim 1, **characterized in that** said containment body (2) comprises a closure body (8) which is integrated in one piece with the containment body (2), a weakened region (81) being provided between said closure body (8) and said containment body (2) around said at least one outflow opening (5), said weakened region being adapted to be broken manually so as to remove said closure body (8) from said containment body (2) in order to free said at least one outflow opening (5).

5. The cartridge according to one or more of the preceding claims, **characterized in that** said closure body (8) has a profile with sharp edges so as to improve its manual grip.

6. The cartridge according to one or more of claims 1-3, **characterized in that** said at least one outflow opening (105) is closed by a film (108).

7. The cartridge according to one or more of the preceding claims, wherein one or more of its components (2, 3, 7, 8, 9; 102, 103, 107, 108, 109) is made:
- of a thermoplastic polymer, such as polypropylene, polystyrene, polyamide, vinyl alcohol resin, polyethylene or polyethylene terephthalate;
- or of a combination of at least two thermoplastic polymers selected from the group comprising polypropylene, polystyrene, polyamide, vinyl alcohol resin, polyethylene and/or polyethylene terephthalate.

8. The cartridge according to one or more of the preceding claims, **characterized in that** one or more of its components (2, 3, 7, 8, 9; 102, 103, 107, 108, 109) is made:
- of a biodegradable material selected from the group comprising biodegradable polyesters, starch-based biodegradable materials, microbial polyesters, biodegradable vinyl alcohol resins, bio-based thermoplastics and polyhydroxyalkanoates;
- or of a combination of at least two biodegradable materials selected from the group comprising biodegradable polyesters, starch-based biodegradable materials, microbial polyesters, biodegradable vinyl alcohol resins, bio-based thermoplastics and or polyhydroxyalkanoates.

## Patentansprüche

1. Patrone (1, 101) zum Extrahieren eines Getränks durch Injizieren eines Fluids, die einen Aufnahmekörper (2, 102) aufweist, der dazu ausgelegt ist, eine Substanz zu enthalten, aus der das Getränk zu extrahieren ist, und dazu ausgelegt ist, das Fluid aufzunehmen, wobei der Aufnahmekörper (2, 102) wenigstens eine Öffnung (5, 105) zum Ausfließen des Getränks hat, die dazu ausgelegt ist, ein Anwachsen des hydraulischen Drucks im Inneren der Patrone zu verhindern, wenn das Fluid injiziert wird, **dadurch gekennzeichnet, dass** der Aufnahmekörper (2, 102) eine Vielzahl erhabener Abschnitte (6, 106) aufweist, um den Fluss des Getränks zu behindern, die in einer zueinander versetzten Anordnung um die wenigstens eine Ausflussöffnung (5, 105) herum angeordnet sind, und die entlang wenigstens zwei geschlossenen Linien angeordnet sind, welche bezüglich der wenigstens einen Ausflussöffnung (5, 105) im Wesentlichen konzentrisch sind, so dass die erhabenen Abschnitte (6, 106) einer Linie bezüglich der erhabenen Abschnitte (6, 106) der benachbarten Linien versetzt sind, d.h. so dass jeder erhabene Abschnitt einer Linie dem Trennbereich zwischen zwei benachbarten erhabenen Abschnitten der benachbarten Linien radial zugewandt ist, um das Vorhandensein radialer Kanäle entlang der Bodenwand (4, 104) des Aufnahmekörpers (2, 102) in Richtung der wenigstens einen Ausflussöffnung (5, 105) zu verhindern.

2. Patrone nach Anspruch 1, **dadurch gekennzeichnet, dass** wenigstens zwei geschlossene Linien jeweilige Umfänge sind.

3. Patrone nach einem oder mehreren der vorhergehenden Ansprüche, **dadurch gekennzeichnet, dass** die erhabenen Abschnitte (6, 106) im Wesentlichen bogenförmig sind.

4. Patrone nach einem oder mehreren der vorhergehenden Ansprüche oder nach dem Oberbegriff von Anspruch 1, **dadurch gekennzeichnet, dass** der Aufnahmekörper (2) einen Verschlusskörper (8) aufweist, der einstückig mit dem Aufnahmekörper (2) integriert ist, wobei zwischen dem Verschlusskörper (8) und dem Aufnahmekörper (2) um die wenigstens eine Ausflussöffnung (5) herum ein geschwächter Bereich (81) vorgesehen ist, wobei der geschwächte Bereich dazu ausgelegt ist, von Hand gebrochen zu werden, um den Verschlusskörper (8) von dem Aufnahmekörper (2) zu entfernen, um die wenigstens eine Ausflussöffnung (5) freizulegen.

5. Patrone nach einem oder mehreren der vorhergehenden Ansprüche, **dadurch gekennzeichnet, dass** der Verschlusskörper (8) ein Profil mit scharfen Kanten hat, um seinen Griff von Hand zu verbessern.

6. Patrone nach einem oder mehreren der Ansprüche 1 bis 3, **dadurch gekennzeichnet, dass** die wenigstens eine Ausflussöffnung (105) durch eine Folie (108) verschlossen ist.

7. Patrone nach einem oder mehreren der vorhergehenden Ansprüche , wobei eine oder mehrere ihrer Komponenten (2, 3, 7, 8, 9; 102, 103, 107, 108, 109) hergestellt ist:
- aus einem thermoplastischen Polymer, wie zum Beispiel Polypropylen, Polystyrol, Polyamid, Vinylalkoholharz, Polyethylen oder Polyethylenterephthalat;
- oder aus einer Kombination von wenigstens zwei thermoplastischen Polymeren, ausgewählt aus der Gruppe bestehend aus Polypropylen, Polystyrol, Polyamid, Vinylalkoholharz, Polyethylen und/oder Polyethylenterephthalat.

8. Patrone nach einem oder mehreren der vorhergehenden Ansprüche, **dadurch gekennzeichnet, dass** eine oder mehrere ihrer Komponenten (2, 3, 7, 8, 9; 102, 103, 107, 108, 109) hergestellt ist:
- aus einem biologisch abbaubaren Material, ausgewählt aus der Gruppe bestehend aus biologisch abbaubaren Polyestern, stärkebasierten biologisch abbaubaren Materialien, mikrobischen Polyestern, biologisch abbaubaren Vinylalkoholharzen, biobasierten Thermoplasten und Polyhydroxyalkanoaten;
- oder aus einer Kombination von wenigstens zwei biologisch abbaubaren Materialien, ausgewählt aus der Gruppe bestehend aus biologisch abbaubaren Polyestern, stärkebasierten biologisch abbaubaren Materialien, mikrobischen Polyestern, biologisch abbaubaren Vinylalkoholharzen, biobasierten Thermoplasten und/oder Polyhydroxyalkanoaten.

## Revendications

1. Cartouche (1, 101) destinée à extraire une boisson en injectant un fluide, comprenant un corps de confinement (2, 102) qui est adapté de façon à contenir une substance à partir de laquelle la boisson doit être extraite, et qui est adapté de façon à recevoir ledit liquide, ledit corps de confinement (2, 102) comprenant au moins une ouverture (5, 105) destinée à la sortie de la boisson, qui est adaptée de façon à empêcher une augmentation de la pression hydraulique à l'intérieur de la cartouche lorsque ledit fluide est injecté, **caractérisée en ce que** ledit corps de confinement (2, 102) comprend une pluralité de parties relevées (6, 106) destinées à entraver l'écoulement de la boisson, qui sont agencées en un agencement mutuellement décalé autour de ladite ou desdites ouvertures de sortie (5, 105), et qui sont agencées le long de deux lignes fermées au moins, qui sont sensiblement concentriques par rapport à ladite ou auxdites ouvertures de sortie (5, 105), de telle sorte que les parties relevées (6, 106) d'une ligne soient décalées par rapport aux parties relevées (6, 106) des lignes adjacentes, à savoir, de telle sorte que chaque partie relevée d'une ligne fasse face de manière radiale à la région de séparation entre deux parties relevées adjacentes des lignes adjacentes, de façon à empêcher la présence de canaux radiaux le long de la paroi inférieure (4, 104) du corps de confinement (2, 102) vers ladite ou vers lesdites ouvertures de sortie (5, 105).

2. Cartouche selon la revendication 1, **caractérisée en ce que** lesdites deux lignes fermées au moins sont des circonférences respectives.

3. Cartouche selon l'une quelconque des revendications précédentes, **caractérisée en ce que** lesdites parties relevées (6, 106) sont sensiblement en forme d'arc.

4. Cartouche selon l'une quelconque des revendications précédentes ou selon le préambule de la revendication 1, **caractérisée en ce que** ledit corps de confinement (2) comprend un corps de fermeture (8) qui est intégré d'une seule pièce avec le corps de confinement (2), une région de faiblesse (81) étant prévue entre ledit corps de fermeture (8) et ledit corps de confinement (2) autour de ladite ou desdites ouvertures de sortie (5), ladite région de faiblesse étant adaptée de façon à être brisée de manière manuelle de façon à retirer ledit corps de fermeture (8) dudit corps de confinement (2) de manière à libérer ladite ou lesdites ouvertures de sortie (5).

5. Cartouche selon l'une quelconque des revendications précédentes, **caractérisée en ce que** ledit corps de fermeture (8) présente un profil avec des bords vifs de façon à améliorer sa préhension manuelle.

6. Cartouche selon l'une quelconque des revendications 1 à 3, **caractérisée en ce que** ladite ou lesdites ouvertures de sortie (105) sont fermées par un film (108).

7. Cartouche selon l'une quelconque des revendications précédentes, dans laquelle un ou plusieurs de ses composants (2, 3, 7, 8, 9 ; 102, 103, 107, 108, 109) sont constitués :
- d'un polymère thermoplastique, tel qu'un polypropylène, un polystyrène, un polyamide, une résine d'alcool de vinyle, un polyéthylène ou un polyéthylène téréphtalate ;
- ou d'une association de deux polymères thermoplastiques au moins sélectionnés dans le groupe constitué par un polypropylène, un polystyrène, un polyamide, une résine d'alcool de vinyle, un polyéthylène et / ou un polyéthylène téréphtalate.

8. Cartouche selon l'une quelconque des revendications précédentes, **caractérisée en ce qu'**un ou plusieurs de ses composants (2, 3, 7, 8, 9 ; 102, 103, 107, 108, 109) sont constitués :
- d'un matériau biodégradable sélectionné dans le groupe constitué par des polyesters biodégradables, des matériaux biodégradables à base d'amidon, des polyesters microbiens, des résines d'alcool de vinyle biodégradables, des biomatériaux thermoplastiques et des polyhydroxyalkanoates ;
- ou d'une association de deux matériaux biodégradables au moins sélectionnés dans le groupe constitué par des polyesters biodégradables, des matériaux biodégradables à base d'amidon, des polyesters microbiens, des résines d'alcool de vinyle biodégradables, des biomatériaux thermoplastiques et des polyhydroxyalkanoates.
